# DEMANDE DE BREVET EUROPEEN

(11) **EP 1 306 523 A1**
(43) Date de publication de la demande: **02.05.2003**
(21) Numéro de dépôt: 02292522.6
(22) Date de dépôt: 14.10.2002
(51) Int. Cl.: F01D 11/00, F01D 5/30

(54) **Plates-formes pour aubes d'un ensemble rotatif**

(30) Priorité: 24.10.2001 FR 0113714
(71) Demandeur: SNECMA MOTEURS, 75015 Paris (FR)
(72) Inventeur: Goga, Jean-Luc, 77430 Champagne sur Seine (FR); Lamothe, Pierre, 31530 Saint-Paul sur Save (FR)
(74) Mandataire: Joly, Jean-Jacques

(57) **Abrégé**

Ensemble rotatif (1) comprenant un disque (2) présentant des évidements (5) à sa périphérie, une pluralité d'aubes (3) portées par le disque, chaque aube ayant un pied d'aube (4) engagé dans un évidement correspondant du disque, et une pluralité de plates-formes (6) rapportées chacune montée sur le disque entre deux aubes voisines, chaque plate-forme (6) étant une pièce en tôle à section sensiblement en oméga ayant deux ailes reliées par un sommet et conformées pour s'appliquer sur les parois latérales (9, 10) des parties inférieures de deux aubes voisines, avec des parties terminales (12, 13) des ailes présentant chacune des renfoncements qui épousent les contours d'un côté (14) d'un pied d'aube et le côté adjacent (15) de la paroi d'un évidement (5) dans lequel le pied d'aube est logé.

## Description

### Arrière-plan de l'invention

La présente invention est relative à un ensemble rotatif de moteur d'avion à turbine à gaz. Elle vise plus particulièrement des plates-formes d'aubes équipant une soufflante d'un tel moteur, mais peut s'appliquer également à des plates-formes de montage d'aubes d'autres ensembles rotatifs, par exemple de compresseur.

De façon connue, la soufflante d'un moteur à turbine à gaz comporte un disque sur lequel sont montées, légèrement pivotantes, des aubes angulairement espacées. Chaque aube est reliée aux deux aubes qui lui sont adjacentes par l'intermédiaire d'organes transmetteurs de force (aussi appelés plates-formes) qui permettent, en tant normal, de limiter le pivotement des aubes. Ces plates-formes ont également pour fonction de protéger le disque et les aubes de la soufflante, pièces dont le coût est élevé.

Actuellement, il existe deux types de plates-formes d'aubes de soufflante de moteur à turbine à gaz qui sont réalisées selon les technologies suivantes :
- les plates-formes directement intégrées aux aubes, pour les attaches droites ; et
- les plates-formes rapportées entre les aubes.

Dans le cas des plates-formes rapportées, on connaît par exemple un système qui consiste à maintenir la plate-forme, par exemple en aluminium, par l'intermédiaire de pions qui sont fixés sur des brides du disque de la soufflante et sur un flasque prévu à l'avant du disque. L'étanchéité de l'ensemble est par ailleurs assurée grâce à des joints latéraux en caoutchouc qui s'appliquent par déformation sur les aubes sous l'effet de la force centrifuge résultant de la rotation du disque de soufflante.

Ce système de maintien de la plate-forme présente un problème majeur lié à l'équilibre de la plate-forme à assurer par ces pions, ainsi qu'au contrôle des déplacements entre les pions et la plate-forme.

Par ailleurs, les problèmes rencontrés en service sont nombreux, à savoir notamment:
- décollement des joints d'étanchéité ;
- déplacement en translation des douilles des pions de maintien, et ceci malgré le serrage au montage de la plate-forme ;
- desserrage des pions sur les brides ;
- risque de corrosion.

En outre, des problèmes d'usure sur les portées des aubes et du disque de la soufflante sont constatés. Afin de résoudre ces problèmes, et plus particulièrement celui concernant l'usure des portées, il est également connu de ré-usiner l'évidement du disque dans lequel est monté le pied de l'aube, et d'ajouter une pièce métallique jouant le rôle de cale d'épaisseur (pièce aussi appelée « clinquant »).

Cependant, malgré la présence de ce clinquant, on constate des décollements du dépôt (matériau anti-usure du type vernis) sur les portées des aubes et du disque de la soufflante. Par ailleurs, le rebrochage est une opération qui s'avère délicate et fastidieuse.

### Objet et résumé de l'invention

La présente invention vise à proposer une plate-forme rapportée d'aubes et un ensemble rotatif utilisant une telle plate-forme qui ne présentent pas de tels inconvénients.

A cet effet, il est prévu un ensemble rotatif comprenant un disque présentant des évidements à sa périphérie, une pluralité d'aubes portées par le disque, chaque aube ayant un pied d'aube engagé dans un évidement correspondant du disque, et une pluralité de plates-formes rapportées chacune montée sur le disque entre deux aubes voisines, caractérisé en ce que chaque plate-forme est une pièce en tôle à section sensiblement en oméga ayant deux ailes reliées par un sommet et conformées pour s'appliquer sur les parois latérales des parties inférieures de deux aubes voisines, avec des parties terminales des ailes présentant chacune des renfoncements qui épousent les contours d'un côté d'un pied d'aube et le côté adjacent de la paroi d'un évidement dans lequel le pied d'aube est logé.

La géométrie particulière de la plate-forme permet à la fois d'assurer la protection des aubes et du disque et l'étanchéité de l'ensemble.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue schématique et partielle d'une plate-forme selon l'invention montée sur un disque d'une soufflante d'un moteur à turbine à gaz ;
- la figure 2 est une vue en perspective d'une plate-forme selon un premier mode de réalisation de l'invention ;
- les figures 3a et 3b sont des vues en perspective respectivement d'un second et d'un troisième mode de réalisation d'une plate-forme selon l'invention.

### Description détaillée d'un mode de réalisation

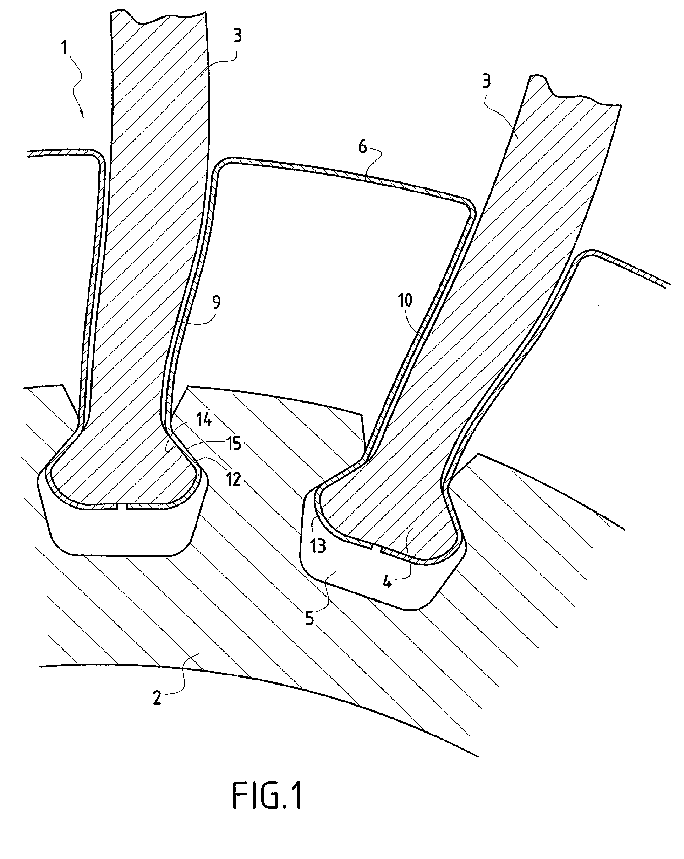

Sur la figure 1, la référence 1 indique un ensemble rotatif de moteur à turbine à gaz qui comporte un disque 2. Cet ensemble rotatif peut par exemple être une soufflante du moteur. Le disque de l'ensemble rotatif est classiquement muni d'une pluralité d'aubes mobiles 3 de profil aérodynamique qui sont régulièrement espacées les unes des autres sur toute sa périphérie.

Chaque aube 3 comporte un pied 4 en forme de queue d'aronde qui vient se monter dans un évidement 5 ménagé à cet effet dans le disque 2 de l'ensemble rotatif 1. Ces évidements 5 ont également une forme en queue d'aronde, de dimensions cependant légèrement supérieures à celles du pied 4 des aubes 3. Ces dernières sont ainsi montées avec du jeu dans les évidements.

De plus, chaque aube 3 est reliée au niveau de son pied 4 à chacune des deux aubes qui lui sont adjacentes par l'intermédiaire d'une plate-forme rapportée 6. Cette plate-forme 6 permet ainsi d'assurer la protection des aubes et du disque et de reconstituer la veine aérodynamique entre les aubes.

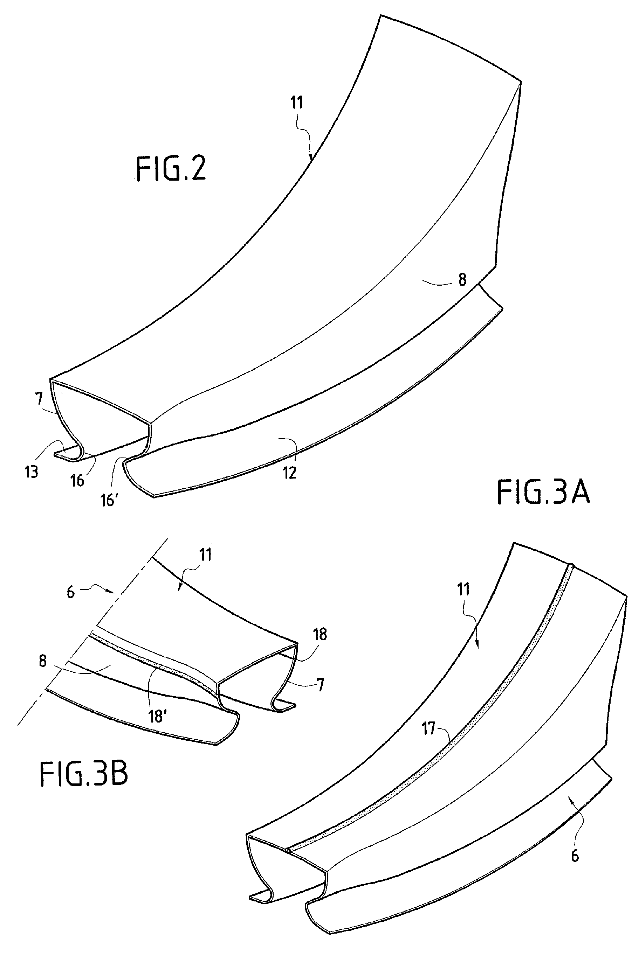

Pour ce faire, la plate-forme 6 est conformée de manière à venir s'encastrer entre deux aubes adjacentes comme représenté par la figure 1. Sur la figure 2, on voit plus précisément que la plate-forme 6 est une pièce en tôle à section sensiblement en oméga (Ω) qui comporte deux ailes 7 et 8 reliées entre elles par un sommet 11. Ces ailes sont conformées pour s'appliquer sur les parois latérales 9 et 10 des parties inférieures des deux aubes voisines entre lesquelles vient s'encastrer la plate-forme.

Par ailleurs, chaque aile 7, 8 se termine, du côté opposé au sommet 11, par une partie terminale 12, 13 qui vient s'encastrer entre un côté 14 d'un pied 4 d'aube et le côté adjacent 15 de la paroi d'un évidement 5 dans lequel est logé le pied d'aube. Plus précisément, les parties terminales 12, 13 des ailes de la plate-forme présentent des renfoncements 16, 16' ou parties concaves qui épousent les contours d'un côté 14 de pied d'aube et du côté correspondant de son logement dans le disque 2.

Grâce à cette géométrie particulière, et en raison du bon encastrement du pied 4 des aubes 3 dans les évidements 5, il est possible de contrôler aisément la position radiale de la plate-forme. Par les effets de la force centrifuge résultant de la rotation du disque, les ailes 7 et 8 de la plate-forme 6 ont tendance à être plaquées contre les parois latérales 9 et 10 des parties inférieures des deux aubes entre lesquelles vient s'encastrer la plate-forme, ce qui assure une bonne étanchéité de l'ensemble à la périphérie du disque. L'utilisation des joints d'étanchéité n'est donc pas nécessaire.

Bien entendu, les ailes 7 et 8 de la plate-forme 6 ont une hauteur (du pied au sommet de l'aube) suffisante pour ne pas subir une déformation trop importante que pourraient engendrer les effets de la force centrifuge. La plate-forme est en outre réalisée dans un matériau déformable élastiquement afin de ne pas se casser sous l'effet de la force centrifuge. Par exemple, on pourra utiliser de l'aluminium ou tout autre matériau similaire.

La plate-forme 6 comporte de préférence, au niveau de son sommet 11, un raidisseur (non représenté). Ce raidisseur permet d'éviter une trop grande déformation sous l'effet des forces centrifuges. Il se présente sous la forme d'une tôle pliée ou soudée s'étendant radialement depuis une extrémité de la plate-forme.

Les ailes 7 et 8 de la plate-forme 6 sont avantageusement revêtues d'un matériau anti-usure du type vernis, au moins sur les faces en contact avec les parties inférieures de parois latérales 9 et 10 des aubes 3 et avec les parois des évidements 5 du disque 2.

La présente invention vise également une plate-forme 6 d'aubes de soufflante de moteur à turbine à gaz telle que décrite précédemment.

On décrira brièvement maintenant trois différents exemples de réalisation d'une plate-forme 6, objet de la présente invention.

Selon un premier mode d'obtention (figure 2), la plate-forme 6 est réalisée par pliage d'une tôle en aluminium ou similaire en une seule partie.

Selon un second mode d'obtention (figure 3a), la plate-forme 6 est réalisée par pliage et soudage de deux parties d'une tôle en aluminium ou similaire selon une génératrice 17, au milieu du sommet 11 de la plate-forme.

Enfin, selon un troisième exemple de mode d'obtention (figure 3b), la plate-forme est réalisée par pliage et soudage de trois parties d'une tôle en aluminium ou similaire selon une génératrice 18, 18' de chaque aile 7, 8 de la plate-forme.

La présente invention telle que décrite précédemment comporte de multiples avantages, et notamment elle permet de pallier les problèmes rencontrés avec les plates-formes classiquement utilisées. Notamment, la géométrie particulière de la plate-forme selon la présente invention permet d'assurer la protection à la fois des aubes et du disque qui les porte, et de garantir l'étanchéité de l'ensemble.

## Revendications

1. Ensemble rotatif (1) comprenant un disque (2) présentant des évidements (5) à sa périphérie, une pluralité d'aubes (3) portées par le disque, chaque aube ayant un pied d'aube (4) engagé dans un évidement correspondant du disque, et une pluralité de plates-formes (6) rapportées chacune montée sur le disque entre deux aubes voisines, **caractérisé en ce que** chaque plate-forme (6) est une pièce en tôle à section sensiblement en oméga ayant deux ailes (7, 8) reliées par un sommet (11) et conformées pour s'appliquer sur les parois latérales (9, 10) des parties inférieures de deux aubes voisines, avec des parties terminales (12, 13) des ailes présentant chacune des renfoncements (16, 16') qui épousent les contours d'un côté (14) d'un pied d'aube et le côté adjacent (15) de la paroi d'un évidement (5) dans lequel le pied d'aube est logé.

2. Ensemble selon la revendication 1, **caractérisé en ce que** le sommet (11) de chaque plate-forme (6) comporte un raidisseur.

3. Ensemble selon l'une des revendications 1 ou 2, **caractérisé en ce que** les ailes (7, 8) de chaque plate-forme (6) sont revêtues d'un matériau anti-usure.

4. Ensemble selon l'une quelconque des revendications précédentes, **caractérisé en ce que** chaque plate-forme est réalisée à partir d'une tôle pliée en une seule partie.

5. Ensemble selon l'une quelconque des revendications 1 à 3, **caractérisé en ce que** chaque plate-forme est réalisée par pliage et soudage de deux parties d'une tôle selon une génératrice (17) au milieu du sommet (11) de la plate-forme.

6. Ensemble selon l'une quelconque des revendications 1 à 3, **caractérisé en ce que** chaque plate-forme est réalisée par pliage et soudage de trois parties d'une tôle selon une génératrice (18, 18') de chaque aile (7, 8) de la plate-forme.

7. Plate-forme (6) pour le montage d'aubes (3) dans des évidements (5) d'un disque (2), **caractérisée en ce qu'**elle est formée par une pièce en tôle à section sensiblement en oméga ayant deux ailes (7, 8) reliées par un sommet (11) et conformées pour s'appliquer sur les parois latérales (9, 10) des parties inférieures de deux aubes voisines, les parties terminales (12, 13) des ailes présentant des renfoncements (16, 16') pour venir s'encastrer chacune entre un côté (14) d'un pied d'aube et le côté adjacent (15) de la paroi d'un évidement (5) dans lequel le pied d'aube est logé.

8. Plate-forme (6) selon la revendication 7, **caractérisée en ce que** son sommet (11) comporte un raidisseur.

9. Plate-forme (6) selon l'une des revendications 7 ou 8, **caractérisée en ce que** ses ailes (7, 8) sont revêtues d'un matériau anti-usure.

10. Plate-forme (6) selon l'une quelconque des revendications 7 à 9, **caractérisée en ce qu'**elle est réalisée à partir d'une tôle pliée.
